# EUROPÄISCHE PATENTANMELDUNG

(11) **EP 4 732 933 A1**
(43) Veröffentlichungstag der Anmeldung: **29.04.2026**
(21) Anmeldenummer: 24208557.9
(22) Anmeldetag: 24.10.2024
(51) Int. Cl.: B01D 53/14, B01D 53/32

(54) **VERFAHREN ZUR GEWINNUNG VON KOHLENSTOFFDIOXID AUS EINEM GASGEMISCH UNTER ELEKTRODIALYTISCHER REGENERATION DER AUSGANGSSTOFFE**

(71) Anmelder: Zentrum für Sonnenenergie- und Wasserstoff-Forschung Baden-Württemberg Gemeinnützige Stiftung, 70563 Stuttgart (DE)
(72) Erfinder: Zuberbühler, Ulrich, 70563 STUTTGART (DE); Feigl, Bastian, 70565 Stuttgart (DE); Baumgart, Frank, 70565 Stuttgart (DE)
(74) Vertreter: Ter Meer Steinmeister & Partner

(57) **Zusammenfassung**

Die Erfindung betrifft ein kontinuierliches Verfahren zur Gewinnung von gasförmigem CO₂ aus einem CO₂-haltigen Gasgemisch, umfassend ein Kontaktieren eines CO₂-haltigen Gasgemischs mit einer basischen Waschlösung zum Ausbilden einer beladenen Waschlösung, ein Mischen der beladenen Waschlösung mit einer Lösung enthaltend Kohlensäure, ein Abtrennen von gasförmigem CO₂ unter Erhalt einer desorbierten Waschlösung, und eine elektrodialytische Regeneration der Ausgangsstoffe, insbesondere der Lösung enthaltend Kohlensäure und der basischen Waschlösung, unter Einsatz der desorbierten Waschlösung. Weiterhin ist die Erfindung auf eine Anlage zur Durchführung dieses Verfahrens und eine Einheit zur Steuerung des Verfahrens gerichtet.

## Beschreibung

### Gebiet der Erfindung

Die Erfindung betrifft ein kontinuierliches Verfahren zur Gewinnung von gasförmigem CO₂ aus einem CO₂-haltigen Gasgemisch, umfassend ein Kontaktieren eines CO₂-haltigen Gasgemischs mit einer basischen Waschlösung zum Ausbilden einer beladenen Waschlösung, ein Mischen der beladenen Waschlösung mit einer Lösung enthaltend Kohlensäure, ein Abtrennen von gasförmigem CO₂ unter Erhalt einer desorbierten Waschlösung, und eine elektrodialytische Regeneration der Ausgangsstoffe, insbesondere der Lösung enthaltend Kohlensäure und der basischen Waschlösung, unter Einsatz der desorbierten Waschlösung. Weiterhin ist die Erfindung auf eine Anlage zur Durchführung dieses Verfahrens und eine Einheit zur Steuerung des Verfahrens gerichtet.

### Technischer Hintergrund

Fossile Energieträger, welche bislang die Grundlage des weltweiten Energie- und Wirtschaftssystems bilden, sind für eine stetig steigende Konzentration an Kohlenstoffdioxid in der Atmosphäre verantwortlich - und damit auch für den Klimawandel. Vor diesem Hintergrund müssen zukünftige Emissionen vermieden und eine Netto-Null-Emissionsstrategie auf den Weg gebracht werden. Zu diesem Zweck wurde u.a. das Direct air capture (DAC)-Verfahren entwickelt, bei welchem es sich um ein Verfahren zur direkten Gewinnung von Kohlenstoffdioxid aus Umgebungsluft unter Verwendung eines geeigneten Sorbens handelt und welches in der Regel einen Absorptionsschritt und einen Desorptionsschritt umfasst. Das auf diese Weise gewonnene Kohlenstoffdioxid kann entweder chemisch (Lösungsmittel, Harnstoff, Kunststoffe, etc.), physikalisch (Karbonisierung, Konservierung, Kältemittel, etc.) oder als eFuel weiter verwertet bzw. durch Sequestrierung dem Kreislauf entzogen werden. Die hohe internationale Relevanz und das steigende Interesse an der DAC-Technologie spiegelt sich unter anderem auch in der Literatur wider, wie z.B. aus einem Bericht der Internationalen Energieagentur (IEA) aus dem Jahr 2022 hervorgeht ("Direct Air Capture: A key technology for net zero").

Die große Herausforderung bei der direkten Gewinnung von Kohlenstoffdioxid aus Umgebungsluft liegt einerseits in der geringen Konzentration des Kohlenstoffdioxids von ca. 415 ppm, was zu hohen Luftvolumenströmen und einem hohen Energiebedarf im Absorptionsschritt führt. Darüber hinaus resultiert aus der geringen Kohlenstoffdioxidkonzentration die Forderung nach einem Sorbens, welches eine möglichst hohe Selektivität gegenüber Kohlenstoffdioxid besitzt und trotz der hohen Luftvolumenströme nicht aus einem für das DAC-Verfahren konfigurierten System in die Umwelt ausgetragen wird. Andererseits muss auch der Energiebedarf des Desorptionsschritts, der ebenfalls vergleichsweise energieintensiv ist, minimiert werden.

Die derzeit bekannten DAC-Verfahren können vornehmlich in Nieder- und Hochtemperaturverfahren unterschieden werden.

Bei den Niedertemperaturverfahren, welche üblicherweise bei einer Desorptionstemperatur von etwa 100°C durchgeführt werden, überwiegt der Einsatz von feststoffgebundenen Aminen als Sorbens. Die niedrige Desorptionstemperatur von etwa 100°C wird hierbei üblicherweise durch Einstellung eines Unterdrucks in der Desorptionseinheit (nachfolgend als Desorber bezeichnet) realisiert, wodurch deren Bauraum stark begrenzt ist. Da Adsorption und Desorption nur zeitlich und nicht räumlich voneinander getrennt sind, betrifft dies zugleich auch die Absorptionseinheit (nachfolgend als Absorber bezeichnet). Dies hat zur Folge, dass die bekannten Niedertemperaturverfahren ausschließlich diskontinuierlich (d.h. im Batch-Betrieb) durchgeführt werden, was zu erhöhten Materialbelastungen, schwankender Produktgasqualität und einem erhöhten regelungstechnischen Aufwand führt. Eine Skalierung kann lediglich über eine Zusammenschaltung vieler einzelner Module geschehen, was wiederum zu erhöhten Materialkosten führt.

Die Hochtemperaturverfahren basieren auf der Verwendung von basischen Waschlösungen, z.B. wässrigen Alkali- oder Erdalkalimetallhydroxidlösungen, als Sorbens, und können daher als kontinuierliche Prozesse konzipiert werden. Allerdings werden in den etablierten Hochtemperaturverfahren Temperaturen von bis zu 900°C verwendet, um Kohlenstoffdioxid wieder freizusetzen (vgl. Keith, D. W., Holmes, G., St. Angelo, D., Heidel, K., 2018 "A Process for Capturing CO2 from the Atmosphere"). Hierzu wird in der Regel Erdgas verbrannt, was zur Freisetzung von neuem Kohlenstoffdioxid führt. Weiterhin besteht das Problem, dass der über mehrere chemische Umwandlungsprozesse ablaufende Desorptionskreislauf technisch aufwendig und kostenintensiv ist, und dass, im Gegensatz zu den Niedertemperaturverfahren, keine Abwärmen aus Niedertemperaturprozessen integriert werden können. Ein Überblick über momentan gebräuchliche Nieder- und Hochtemperaturverfahren zur Gewinnung von Kohlenstoffdioxid aus Umgebungsluft findet sich u.a. in Viehbahn et al. (Energiewirtsch. Tagesfragen 69(12), 30-33), Fasihi et al. (J. Clean. Prod. 224, 957-980) und Heß et al. ("Nutzung von CO2 aus Luft als Rohstoff für synthetische Kraftstoffe und Chemikalien", Studie im Auftrag des Ministeriums für Verkehr Baden-Württemberg, Karlsruhe Institute of Technology, Dezember 2020).

Ein weiteres DAC-Verfahren ist aus der DE 42 35 125 A1 bekannt. Dort ist das Ziel, ein Verfahren anzugeben, mit dem Synthesegas für die Herstellung von Methanol ohne die Verwendung fossiler Energieträger als Ausgangsmaterialien bereitgestellt werden kann. Für dieses Verfahren wird eine Vorrichtung vorgeschlagen, die einen Absorber, einen Neutralisator zur CO₂-Entgasung und eine Elektrodialyseeinheit umfasst. Über eine Versorgungsleitung wird dem Absorber ein kohlendioxidhaltiges Gasgemisch, z. B. Luft, zugeführt. Gleichzeitig wird der Absorber über eine Leitung mit einer Waschlösung zum Auswaschen und Binden des Kohlendioxids aus der Luft versorgt. Die Restluft, die nach Auswaschen und Binden des Kohlendioxids übrigbleibt, wird abgeführt, während das als K₂CO₃ gebundene Kohlenstoffdioxid, dem Neutralisator zugeführt wird. Der Neutralisator wird über eine Versorgungsleitung mit Schwefelsäure gespeist, wobei Kohlensäure entsteht und in der Folge CO₂ entgast, da die Kohlensäure in Kohlendioxid und Wasser zerfällt. Das entgaste CO₂ wird aufgefangen und die entgaste Lösung wird zur Regeneration von Kalilauge und Schwefelsäure der Elektrodialyse-Einheit zugeführt. Die Kalilauge wird zurück in den Absorber und die Schwefelsäure zurück zum Neutralisator geführt. Nachteilig an diesem Verfahren ist der zwingende Einsatz von Schwefelsäure, was einen hohen apparativen Aufwand darstellt. Schwefelsäure ist eine starke Mineralsäure deren Verwendung mit vielfältigen Sicherheitsrisiken und einer Gefährdung der Umwelt einher geht. Nachteilig ist ferner, dass die beladene Waschlösung eine andere Base enthält als die zur Regeneration eingesetzte Schwefelsäure.

Auch die WO 2020/152330 A1 befasst sich mit einem Verfahren zum Abtrennen und Gewinnen von Kohlendioxid aus der Umgebungsluft. Das darin beschriebene Verfahren umfasst die kontinuierliche Durchführung der folgenden Schritte: a) In-Kontakt-Bringen von Umgebungsluft mit einer wässrigen Lösung zumindest eines Alkali- oder Erdalkalimetallkations zur Absorption des Kohlendioxids in die Lösung unter Bildung des Hydrogencarbonats bzw. Carbonats des zumindest einen Metalls; b) Elektrodialyse der dabei erhaltenen Lösung unter Verwendung einer Kombination aus bipolaren Ionentauschermembranen und für ein- oder mehrwertige Anionen selektiven Ionentauschermembranen zum Erhalt einer an (Hydrogen-)Carbonat-Ionen angereicherten und einer daran abgereicherten Lösung, wobei die an (Hydrogen-)Carbonat-Ionen abgereicherte Lösung zu Schritt a) rezykliert wird; c) thermische Desorption des Kohlendioxids aus der in Schritt b) erhaltenen, an (Hydrogen-)Carbonat-Ionen angereicherten Lösung mittels Dampfstrippen zum Erhalt eines Kohlendioxid-Wasserdampf-Gemischs und einer an CO2 abgereicherten Lösung, die zu Schritt b) rezykliert wird, wobei darin ein pH zwischen 7 und 8,5 oder zwischen 8 und 9,5 eingestellt wird; und d) Abtrennung von Wasser aus dem erhaltenen Kohlendioxid-Wasserdampf Gemisch mittels Kühlung zur Kondensation des Wasserdampfs. Schwierigkeiten bereitet bei diesem Verfahren unter anderem die Gasentwicklung in der Elektrodialyse. Wenn die Lösung aus Schritt a) direkt der Elektrodialyse zur weiteren Anreicherung von Hydrogencarbonat bzw. Carbonat zugeführt wird, liegt in der Regel eine so hohe Beladung der Lösung vor, dass sich schon bei kleinsten Änderungen der vorliegenden Bedingungen (Druck/Temperatur) schnell größere Mengen an gasförmigem CO₂ entwickeln. Außerdem erfordert Dampfstrippen zusätzlichen Einsatz an Energie und zusätzliche Stoffströme, was nachteilig für die Bilanz des Gesamtprozesses ist.

Das Problem der Gasentwicklung in der Elektrodialyse besteht auch bei dem Verfahren aus der DE 10 2022 105 042 A1, in dem das beladene Absorptionsmittel ebenfalls direkt einer elektrolytischen oder elektrodialytischen Einheit zugeführt wird.

Mithin besteht Bedarf an einer weiter verbesserten Lösung für ein Verfahren zur CO₂-Gewinnung aus einem CO₂-haltigen Gasgemisch.

### Aufgabe der Erfindung

Die vorliegende Erfindung hat sich zur Aufgabe gemacht, die aus dem Stand der Technik bekannten Nachteile zu überwinden. Ein Ziel der vorliegenden Erfindung war es, ein skalierfähiges Verfahren zu entwickeln, das es ermöglicht, CO₂ besonders einfach und energieeffizient aus einem CO₂-haltigen Gasgemisch zu gewinnen. Ein weiteres Ziel bestand darin, eine Anlage bereitzustellen, mit deren Hilfe das Verfahren durchgeführt werden kann. Zudem sollten sich Verfahren und Vorrichtung auf klimarelevanten Maßstab skalieren lassen.

### Zusammenfassung der Erfindung

Diese Aufgaben werden durch die erfindungsgemäßen Verfahren und die erfindungsgemäße Vorrichtung, jeweils mit den Merkmalen der unabhängigen Ansprüche, gelöst. Bevorzugte Merkmale finden sich in den abhängigen Ansprüchen.

Das Verfahren gemäß einem ersten Aspekt der Erfindung ist ein kontinuierliches Verfahren zur Gewinnung von gasförmigem CO₂ aus einem CO₂-haltigen Gasgemisch, umfassend: (a) ein Kontaktieren eines CO₂-haltigen Gasgemischs mit einer basischen Waschlösung, wobei die basische Waschlösung zumindest einen Teil des CO₂ in dem CO₂-haltigen Gasgemisch absorbiert und eine beladene Waschlösung bildet, (b) ein Mischen der beladenen Waschlösung mit einer Lösung enthaltend Kohlensäure, (c) ein Abtrennen von gasförmigem CO₂ unter Erhalt einer desorbierten Waschlösung, und (d) ein elektrodialytisches Bereitstellen der Lösung enthaltend Kohlensäure und der basischen Waschlösung unter Einsatz der desorbierten Waschlösung aus Schritt (c). Bei dem erfindungsgemäßen Verfahren stammt die basische Waschlösung in Schritt (a) zumindest teilweise, bevorzugt zu mehr als 90 Vol.-%, insbesondere zu mehr als 95 Vol.-%, aus der in Schritt (d) bereitgestellten basischen Waschlösung und die in Schritt (d) bereitgestellte Lösung enthaltend Kohlensäure wird in Schritt (b) verwendet.

In einer bevorzugten Ausführungsform umfasst das CO₂-haltige Gasgemisch Luft oder besteht daraus. Unter dem Begriff Luft werden Umgebungsluft, Abluft, darunter auch industrielle Abluft und/oder Abgase verstanden. Das CO₂-haltige Gasgemisch kann einen geringen CO₂-Anteil aufweisen, beispielsweise einen CO₂-Anteil von 0,03 bis 5 Vol.-%, bevorzugt 0,03 bis 0,5 Vol.-%, besonders bevorzugt 0,03 bis 0,05 Vol.-%, aufweisen. Typischerweise enthält Luft ca. 415 ppm Kohlenstoffdioxid.

Bevorzugt ist die basische Waschlösung ausgewählt aus der Gruppe bestehend aus einer wässrigen Lösung von Hydroxidionen und Kationen aus der 1. Hauptgruppe des Periodensystems, bevorzugt einer Natriumhydroxid- oder Kaliumhydroxidlösung; einer wässrigen Lösung hochmolekularer, verzweigter Amine, bevorzugt einer Polyethyleniminlösung; oder Mischungen hiervon. Besonders bevorzugt ist die Verwendung von Natriumhydroxidlösung oder Kaliumhydroxidlösung als basische Waschlösung. In diesem Fall wird CO₂ in Schritt (a) des Verfahrens chemisch in der Waschlösung gebunden. Dies bedeutet, dass CO₂ in der beladenen Waschlösung entweder als Na₂CO₃ oder als K₂CO₃ oder als Hydrogencarbonat vorliegt. Dadurch ist der CO₂-Partialdruck der Waschlösung im beladenen Zustand sehr gering, was die CO₂-Absorption begünstigt und beispielsweise eine CO₂-Absorption aus der Luft mit ca. 415 ppm Kohlenstoffdioxid überhaupt erst ermöglicht.

Weiterhin ist bevorzugt, wenn die basische Waschlösung eine hochkonzentrierte Lösung ist, in der Natriumhydroxid oder Kaliumhydroxid in einer Konzentration von mehr als 15 Gew.-%, insbesondere mehre als 20 Gew.-% vorliegt. Bei solchen hochkonzentrierten basischen Waschlösungen wird in Schritt (a) nicht nur CO₂ absorbiert, sondern auch Wasser. Mithin kann das Verfahren gleichzeitig, wenn gewünscht, auch zur Gewinnung von Wasser genutzt werden.

Bei dem erfindungsgemäßen Verfahren ist vorteilhaft, wenn die Waschlösung in den Schritten (b) und/oder (d) unter einem Druck von mindestens 0,9 bar, bevorzugt 1,0 bis 5,0 bar, insbesondere 1,0 bis 3,0 bar, steht. Ein höherer Druck in Schritt (d) des Verfahrens kann von Vorteil sein, da sich bei der Elektrodialyse bereits gasförmiges CO₂ bilden kann, was gegebenenfalls den Stromverbrauch erhöht. Durch Einstellen eines Drucks von mindestens 0,9 bar, bevorzugt 1,0 bis 5,0 bar, insbesondere 1,0 bis 3,0 bar, kann die CO₂-Entwicklung effektiv unterdrückt werden. Außerdem hat sich herausgestellt, dass es günstig ist, wenn die Abtrennung von gasförmigem CO₂ in Schritt (c) durch Druckerniedrigung erfolgt, bevorzugt durch Druckerniedrigung um 0,5 bar oder mehr, insbesondere durch Druckerniedrigung um 0,8 bar bis 1,5 bar.

Die basische Waschlösung in Schritt (a) hat bevorzugt einen pH-Wert von mehr als 10, besonders bevorzugt von mehr als 12, ganz besonders bevorzugt von mehr als 13.

Das Kontaktieren des CO₂-haltigen Gasgemischs mit der basischen Waschlösung in Schritt (a) des Verfahrens erfolgt bevorzugt im Gegenstrom. Alternativ können die basische Waschlösung und das CO₂-haltige Gasgemisch in Schritt (a) im Kreuzstrom geführt werden.

In einer Verfahrensvariante wird während der Abtrennung von gasförmigem CO₂ auch Wasserdampf abgetrennt, wobei der Wasserdampf in einem weiteren Verfahrensschritt (e) bevorzugt auskondensiert wird. Aus Gründen der Energieeffizienz kann dabei auch die Kondensationswärme rekuperiert werden.

Des Weiteren können verschiedene Ströme in dem Verfahren zur Wärmeintegration entsprechend miteinander verschaltet werden. Beispielsweise kann Wärme zwischen der basischen Waschlösung nach Schritt (d) und der beladenen Waschlösung nach Schritt (a) ausgetauscht werden. Das elektrolytische Bereitstellen der Lösung enthaltend Kohlensäure und der basischen Waschlösung kann bei Temperaturen bis zu 100 °C erfolgen, jedoch sind niedrigere Temperaturen von 50 °C und weniger für die Elektrodialyse bevorzugt.

In einem zweiten Aspekt der Erfindung wird ein leicht modifiziertes Verfahren zur Gewinnung von gasförmigem CO₂ aus einem CO₂-haltigen Gasgemisch angegeben. Dieses Verfahren ist ebenfalls ein kontinuierliches Verfahren. Es umfasst: (a) Kontaktieren eines CO₂-haltigen Gasgemischs mit einer basischen Waschlösung, wobei die basische Waschlösung zumindest einen Teil des CO₂ in dem CO₂-haltigen Gasgemisch absorbiert und eine beladene Waschlösung bildet, (b) elektrodialytisches Behandeln der beladenen Waschlösung, (c) Abtrennen von gasförmigem CO₂ unter Erhalt einer desorbierten Waschlösung und (d) elektrodialytisches Behandeln der desorbierten Waschlösung zum Bereitstellen der basischen Waschlösung. Die basische Waschlösung in Schritt (a) stammt zumindest teilweise aus der in Schritt (d) bereitgestellten basischen Waschlösung. Ferner findet das elektrodialytische Behandeln der beladenen Waschlösung in Schritt (b) und der desorbierten Waschlösung in Schritt (d) in benachbarten Kammern eines Elektrodialyse-Separators statt.

Die bevorzugten Ausführungsformen des Verfahrens gemäß dem ersten Aspekt der Erfindung gelten hinsichtlich des CO₂-haltigen Gasgemischs, der basischen Waschlösung, des pH-Werts der basischen Waschlösung in Schritt (a), der Stromführung in Schritt (a), der gleichzeitigen Abtrennung von gasförmigem CO₂ und Wasserdampf und den Möglichkeiten zur Wärmeintegration gleichermaßen für das Verfahren gemäß dem zweiten Aspekt der Erfindung.

Die Erfindung stellt auch eine Anlage zur kontinuierlichen Gewinnung von CO₂ aus einem CO₂-haltigen Gasgemisch bereit, umfassend einen Gaswäscher zum Kontaktieren eines CO₂-haltigen Gasgemischs mit einer basischen Waschlösung unter Erhalt einer beladenen Waschlösung, einen Elektrodialyse-Separator zum Bereitstellen von Kohlensäure und basischer Waschlösung, eine erste Verbindung zwischen dem Gaswäscher und dem Elektrodialyse Separator zum Zuführen der beladenen Waschlösung in einen Säurekreislauf, in dem eine Lösung enthaltend die von dem Elektrodialyse-Separator bereitgestellte Kohlensäure zirkuliert, eine im Säurekreislauf angeordnete Einheit zum Abtrennen von CO₂, und eine zweite Verbindung zwischen dem Elektrodialyse-Separator und dem Gaswäscher zum Rückführen der basischen Waschlösung. In dieser Anlage kann das Verfahren gemäß dem ersten Aspekt der vorliegenden Erfindung durchgeführt werden.

Der Gaswäscher zum Kontaktieren eines CO₂-haltigen Gasgemischs mit einer basischen Waschlösung kann ein Kreuzstrom- oder Gegenstromgaswäscher sein. Für den Fall, dass der Gaswäscher ein Gegenstromgaswäscher ist, wird die basische Waschlösung typischerweise am Kopf des Gaswäschers oder in räumlicher Nähe zum Kopf des Gaswäschers zugeführt, während die beladene Waschlösung am Sumpf des Gaswäschers oder in räumlicher Nähe zum Sumpf des Gaswäschers entnommen wird. Die Mengen zugeführter und entnommener Waschlösung sind im Mittel gleich groß, können aber zeitweise variiert werden, so dass der Wäscher in einem energetisch günstigen Zustand betrieben wird. Energetisch günstig ist dabei ein niedriger Energieverbrauch in kWh/kgCO₂. Der Gaswäscher kann dabei die Funktion eines CO₂-Puffers übernehmen. Wird z.B. bei sonst gleichen Bedingungen (z.B. gleiche geförderte Luftmenge) die CO₂-Entnahme über den Umlauf reduziert, fällt die Hydroxid-Konzentration und damit die CO₂-Absorptionskapazität. Gleichzeitig steigt die Carbonat-Konzentration an und es ist viel "gespeichertes" CO₂ im Verfahren vorhanden.

Das Kernstück der Anlage bildet der Elektrodialyse-Separator. Der Elektrodialyse-Separator umfasst bevorzugt eine Kathodenkammer umfassend eine Kathode und eine Anodenkammer umfassend eine Anode sowie mindestens zwei zwischen Kathodenkammer und Anodenkammer angeordnete Dialysekammern, wobei die Dialysekammern bevorzugt durch eine bipolare Membran voneinander getrennt sind. Der Elektrodialyse-Separator kann zwischen Kathode und Anode einen Zellstapel von bis zu 100 Dialysekammern umfassen, die durch alternierende Anordnung von Kationentauschermembranen und bipolaren Membranen gebildet werden.

Die mindestens zwei Dialysekammern (manchmal auch als "Zellen" bezeichnet) können von der Kathodenkammer bzw. der Anodenkammer bevorzugt durch jeweils eine Kationentauschermembran getrennt sein.

In einer ersten Dialysekammer erniedrigt sich der pH-Wert (Ansäuerung), während sich der pH-Wert in einer zweiten Kammer erhöht. Somit kann die erste Dialysekammer auch als saure Kammer bezeichnet werden und die zweite Dialysekammer als basische Kammer. Bevorzugt werden beide Dialysekammern jeweils im Kreislauf durchströmt, wobei die Kreisläufe jeweils verschiedene Komponenten umfassen.

Vorzugsweise umfasst oder besteht der Säurekreislauf aus: Der Einheit zum Abtrennen von CO₂, einer ersten Dialysekammer des Elektrodialyse-Separators und einem ersten Ventil. Der Basenkreislauf in der Anlage kann aus einem Vorlagebehälter, einer zweiten Dialysekammer des Elektrodialyse-Separators und einem zweiten Ventil bestehen oder diese Komponenten umfassen.

Es ist bevorzugt, wenn im Säure- bzw. Basenkreislauf unterschiedliche pH-Werte eingestellt werden. Dadurch können bei der Absorption und der Desorption nahezu unabhängig optimale Betriebsbedingungen eingestellt werden. Je nach Eigenschaften des CO₂-haltigen Gasgemischs (z.B. relative Feuchte und Temperatur) kann es sinnvoll sein, einen hohen pH-Wert der basischen Waschlösung zu wählen, d.h. den Gaswäscher mit hoher Hydroxid-Konzentration zu fahren und dementsprechend auch eine hohe Hydroxid-Konzentration im Basenkreislauf einzustellen. Im Basenkreislauf kann beispielsweise 1M-5M NaOH-Lösung zirkulieren. Gleichzeitig kann es für die Desorption günstiger sein, einen niedrigen pH-Wert zu wählen.

Ferner kann die Anlage eine Ausgleichsleitung zum Volumenausgleich zwischen dem Säurekreislauf und dem Basenkreislauf aufweisen. Ebenso ist bevorzugt, wenn die Anlage neben dem Säurekreislauf und dem Basenkreislauf einen Elektrodenkreislauf umfasst. Der Elektrodenkreislauf kann dabei für die Durchströmung der Kathodenkammer und/oder der Anodenkammer sorgen. Bevorzugt umfasst der Elektrodenkreislauf einen Vorlagebehälter zum Vorhalten bzw. Speichern von Flüssigkeit, z.B. eines Elektrolyten oder Wasser.

Die erste Verbindung zwischen dem Gaswäscher und dem Elektrodialyse Separator zum Zuführen der beladenen Waschlösung in einen Säurekreislauf ist vorzugsweise so ausgestaltet, dass sie einen Punkt oder eine Mischeinheit umfasst, in dem ein Volumenstrom der beladenen Waschlösung und ein Volumenstrom der Lösung enthaltend Kohlensäure zusammengeführt bzw. miteinander vereinigt werden. Der Mischeinheit oder dem Mischpunkt vorgeschaltet kann ein Ventil sein (auch als erstes Ventil bezeichnet). Durch das Ventil lässt sich der Volumenstrom der Lösung enthaltend Kohlensäure regulieren, z.B. drosseln. Dadurch kann ein gewünschtes Mischverhältnis zwischen der beladenen Waschlösung und der Kohlensäure bzw. der Lösung enthaltend Kohlensäure eingestellt werden.

In einer bevorzugten Ausführungsform umfasst die Anlage mindestens einen Sensor zur Messung der Leitfähigkeit, des pH-Werts, des Drucks, des Durchflusses und/oder der Viskosität. Der mindestens eine Sensor ist bevorzugt zwischen dem Elektrodialyse-Separator und der Einheit zum Abtrennen von CO₂ angeordnet. Besonders bevorzugt umfasst die Anlage mehrere Sensoren zur Messung der Leitfähigkeit, des pH-Werts, des Drucks, des Durchflusses und/oder der Viskosität. Im Säurekreislauf und im Basenkreislauf ist bevorzugt jeweils mindestens ein Sensor angeordnet. Vorteilhaft ist ferner, einen oder mehrere zusätzliche Sensoren zur Messung der Leitfähigkeit, des pH-Werts, des Drucks, des Durchflusses und/oder der Viskosität der beladenen (d.h. vom Gaswäscher kommenden) Waschlösung vorzusehen.

Die Anlage kann außerdem eine Steuereinheit umfassen, die eingerichtet ist, das erste Ventil und/oder die an den Elektrodialyse-Separator angelegte Spannung oder den Strom in Abhängigkeit der Messung durch den Sensor, d.h. in Abhängigkeit des Sensor-Messergebnisses, einzustellen.

Die Erfindung betrifft weiterhin eine Einheit zur Steuerung des oben beschriebenen Verfahrens oder der oben beschriebenen Anlage. Die Einheit zur Steuerung ist dazu eingerichtet, den Volumenstrom der basischen Waschlösung in Schritt (a) und/oder das Mischverhältnis in Schritt (b) und/oder die Bereitstellungsrate in Schritt (d) in Abhängigkeit der vom Sensor gemessenen Leitfähigkeit, des pH-Werts, des Drucks, des Durchflusses und/oder der Viskosität zu kontrollieren. Alternative ist die Einheit zur Steuerung dazu eingerichtet, das erste Ventil und/oder das zweite Ventil und/oder die an den Elektrodialyse-Separator angelegte Spannung oder den Strom in Abhängigkeit der vom Sensor gemessenen Leitfähigkeit, des pH-Werts, des Drucks, des Durchflusses und/oder der Viskosität zu kontrollieren. Dabei verwendet die Einheit zur Steuerung bevorzugt einen Algorithmus zum maschinellen Lernen aus bereits gesammelten Daten von dem Verfahren oder der Anlage.

In einem weiteren Aspekt der Erfindung wird eine Anlage bereitgestellt, in der das Verfahren gemäß dem zweiten Aspekt der vorliegenden Erfindung durchgeführt werden kann. Diese Anlage ist ebenfalls eine Anlage zur kontinuierlichen Gewinnung von CO₂ aus einem CO₂-haltigen Gasgemisch, umfassend: einen Gaswäscher zum Kontaktieren eines CO₂-haltigen Gasgemischs mit einer basischen Waschlösung unter Erhalt einer beladenen Waschlösung, einen Elektrodialyse-Separator zum elektrodialytischen Behandeln der beladenen Waschlösung und zum Bereitstellen von basischer Waschlösung, eine zwischen der zwei Kammern des Elektrodialyse-Separators angeordnete Abtrenneinrichtung zum Abtrennen von CO₂ aus der elektrodialytisch behandelten beladenen Waschlösung, eine Verbindung zwischen dem Elektrodialyse-Separator und dem Gaswäscher zur Rückführung der basischen Waschlösung.

Die bevorzugten Ausführungsformen der Anlage gemäß dem ersten Aspekt der Erfindung gelten hinsichtlich des Elektrodialyse-Separators, des Elektrodenkreislaufs und des mindestens einen Sensors, gleichermaßen für die Anlage gemäß dem zweiten Aspekt der Erfindung.

### Beschreibung der bevorzugten Ausführungsformen

Bevorzugte Ausführungsformen der Erfindung werden unter Bezugnahme auf die nachfolgenden Figuren und Versuche näher erläutert, ohne die Erfindung darauf beschränken zu wollen.
**Figur 1** zeigt ein Fließschema einer Anlage zur kontinuierlichen Gewinnung von CO₂ aus einem CO₂-haltigen Gasgemisch gemäß einem ersten Aspekt der Erfindung.
**Figur 2** zeigt das sogenannte Hägg Diagramm, das relevant für die "chemische" Löslichkeit von CO₂ ist.
**Figur 3** zeigt ein Diagramm der "physikalischen" Löslichkeit verschiedener Gase in Abhängigkeit der Temperatur.
**Figur 4** zeigt ein Diagramm, das den Zusammenhang zwischen Molarität der Waschlösung und der elektrischen Leitfähigkeit wiedergibt.
**Figur 5** ist ein Diagramm, aus dem der Wassergehalt der Luft über reinem Wasser und gesättigter KOH bei verschiedenen Temperaturen abgelesen werden kann.
**Figur 6** zeigt ein Fließschema einer Anlage zur kontinuierlichen Gewinnung von CO₂ aus einem CO₂-haltigen Gasgemisch gemäß einem zweiten Aspekt der Erfindung.

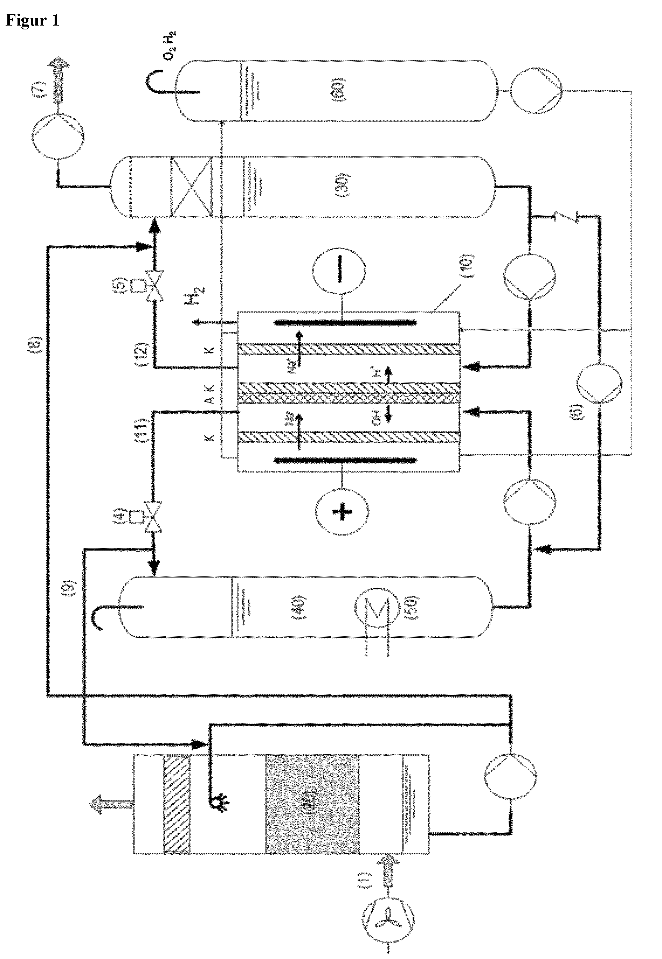

In **Fig. 1** wird über eine Zuleitung 1 ein CO₂-haltiges Gasgemisch in den Gaswäscher 20 geleitet. Hierbei kann ein Gebläse oder ein Kompressor zum Einsatz kommen. Die Gaszuleitung ist am Wäschersumpf oder seitlich am Gaswäscher 20 installiert. Zur Gewinnung von CO₂ aus dem Gasgemisch erfolgt eine Kontaktierung des Gasgemischs mit einer basischen Waschlösung. Die basische Waschlösung ist bevorzugt eine wässrige Lösung von Hydroxidionen und Kationen aus der 1. Hauptgruppe des Periodensystems. Bei der Beschreibung von Fig. 1 wird zur Vereinfachung auf Natronlauge (NaOH) als basische Waschlösung Bezug genommen. Die Waschlösung fließt, wie hier dargestellt ist, bevorzugt im Kreis und wird in einer Elektrodialyse immer wieder regeneriert. Das CO₂-haltige Gasgemisch kann der Waschlösung im Gaswäscher 20 entgegenströmen (Gegenstrom-Prinzip). Alternativ können auch Gaswäscher mit Kreuzstromführung eingesetzt werden. Nach Kontaktierung von CO₂-haltigem Gasgemisch und basischer Waschlösung verlässt das CO₂-arme bzw. abgereicherte Gasgemisch den Gaswäscher über Kopf, während die beladene Waschlösung am Wäschersumpf entnommen wird und mit Hilfe einer Pumpe in Richtung der Einheit 30 gefördert wird.

Vor Eintritt der beladenen Waschlösung in die Einheit 30 wird die beladene Waschlösung mit einer Lösung enthaltend Kohlensäure gemischt. Die Lösung enthaltend Kohlensäure wird im Säurekreislauf durch eine Verbindung 12 zwischen dem Ausgang eines Elektrodialyse-Separators 10 und dem Zuführpunkt oder der Mischeinheit geleitet und dann mit der beladenen Waschlösung kombiniert bzw. vereint. Das Mischverhältnis zwischen der beladenen Waschlösung und Kohlensäure kann dabei in gewissen Grenzen durch ein erstes Ventil 5 kontrolliert werden. Anders als in Figur 1 dargestellt ist, kann die Mischung zwischen der beladenen Waschlösung und der Kohlensäure auch erst direkt bei Eintritt in die Einheit 30 erfolgen.

Durch das Mischen der beladenen Waschlösung mit der Kohlensäure verschiebt sich das Kohlensäuregleichgewicht. In der beladenen Waschlösung, die vom Gaswäscher kommt, ist das CO₂ noch als Carbonat und Hydrogencarbonat gebunden. Durch Erniedrigung des pH-Werts bildet sich aus dem Carbonat und dem Hydrogencarbonat dann Kohlensäure, die je nach Druck und Temperaturbedingungen noch für kurze Zeit in physikalischer Lösung vorliegen kann. Beim Zulauf in die Einheit 30 kommt es aber zu einer Entspannung, gasförmiges CO₂ wird freigesetzt und sammelt sich am Kopf der Einheit 30.

Das CO₂ kann dann am Kopf der Einheit 30 bei atmosphärischem Druck von 0-50 mbar abgezogen (Vergleich Stoffstrom 7) und zur Weiterverarbeitung z.B. komprimiert und in einem Zwischenbehälter gepuffert werden. Mittels geregelter Überströmventile kann eine Steuerung implementiert werden, die bei konstantem Behälterdruck gerade so viel CO₂ abzieht, wie freigesetzt wird. Zur Überwachung der CO₂-Qualität hinsichtlich des Sauerstoffgehalts kann in der Saugleitung des Kompressors eine Lambda-Sonde eingebaut werden.

Die desorbierte Waschlösung wird zur Regeneration der Kohlensäure und der basischen Waschlösung einer Elektrodialyse zugeführt. Der Elektrodialyse-Separator 10 wird nach dem sogenannten "Feed-und-Bleed"-Prinzip betrieben. Es wird kontinuierlich beladene Waschlösung als "Feed" 8 in einen Säurekreislauf zugeführt. Der Säurekreislauf umfasst die Einheit 30, die auch als Vorlagebehälter bezeichnet werden kann, und eine erste Dialysekammer des Elektrodialyse-Separators 10. Eine zweite Dialysekammer des Elektrodialyse-Separators 10 ist Teil eines Basenkreislaufs, der auch noch einen Vorlagebehälter 40 umfassen kann. Im Vorlagebehälter 40 kann ein Wärmetauscher 50 installiert sein, der zur Kühlung der Lösung im Basenkreislauf und damit zur Kühlung des gesamten Elektrodialyse-Separators beiträgt. Im Basenkreislauf wird die regenerierte basische Waschlösung zunächst durch eine Verbindung 12 geleitet, in der ein zweites Ventil 4 vorgesehen ist und dann zwischen dem Ausgang des Elektrodialyse-Separators und dem Gaswäscher als "Bleed" 9 entnommen. Im Gaswäscher bildet die regenerierte basische Waschlösung nach Kontaktierung mit CO₂ aus dem CO₂-haltigen Gasgemisch wieder Carbonat und Hydrogencarbonat. Die Umläufe in den Basen- und Säurekreisläufen können jeweils beispielsweise 1600 L/h bei einem Vorlagevolumen in den Vorlagebehältern von ca. 100 L betragen.

Der Elektrodialyse-Separator 10 besteht aus planaren Kationentauschermembranen K und mindestens einer bipolaren Membran AK, wobei kationenleitende und bipolare Membran alternierend angeordnet sind. Die bipolaren Membranen bestehen aus einer für Anionen permeablen Seite und einer für Kationen permeablen Seite. Die Membrananordnung umfasst weiterhin ein Elektrodenpaar, an welches eine Gleichspannung angelegt ist. Die Gleichspannung wird so angelegt, dass die Anionentauscherseite der bipolaren Membran der Anode und die Kationentauscherseite der Kathode zugewandt sind.

Die desorbierte Waschlösung wird von der Einheit 30 in eine erste Kammer des Elektrodialyse-Separators 10 gespeist. Die erste Kammer befindet sich zwischen der kationenselektiven Seite K der bipolaren Membran AK und der Kationentauschermembran K. Zeitgleich wird Natronlauge innerhalb des Basenkreislaufs in eine zweite Kammer des Elektrodialyse-Separators 10 gespeist. Die zweite Kammer befindet zwischen der Anionentauscherseite A der bipolaren Membran AK und der Kationentauschermembran K.

An der Grenzschicht zwischen den anionen- und kationenselektiven Einzelmembranen der bipolaren Membran AK wandern H⁺-Ionen in Richtung der Kathode durch die Kationentauscherseite K der bipolaren Membran AK. Die OH⁻-Ionen wandern entsprechend in Richtung der Anode durch die Anionentauscherseite A der bipolaren Membran AK. In der ersten Kammer ergibt sich somit eine erhöhte Konzentration an H⁺-Ionen, in der zweiten Kammer eine entsprechend erhöhte Konzentration an OH⁻-Ionen.

Aufgrund des selektiven Ionentransports in den Membranen und des angelegten elektrischen Feldes wird die in die erste Kammer eingeleitete Na₂CO₃-Lösung in NaOH und H₂CO₃ aufgetrennt.

Aus der eingeleiteten Na₂CO₃-Lösung werden Natriumionen durch die Kationentauschermembran K in die in Richtung der Kathode liegende zweite Kammer gezogen, während die CO₃²⁻-Ionen in der ersten Kammer verbleiben, in welche H⁺-Ionen durch die kationenselektive Seite K der bipolaren Membran AK nachgeliefert werden.

Die in Richtung der Kathode durch die Kationentauschermembran K in zweite Kammer wandernden Kaliumionen bilden zusammen mit den durch die anionenselektiven Seite A der bipolaren Membran AK in Richtung der Anode wandernden Hydroxylionen Natronlauge (NaOH).

Dadurch wird die basische Waschlösung vollständig regeneriert und kann zur erneuten Kontaktierung mit CO₂-haltigem Gasgemisch im Gaswäscher als Bleed 9 aus dem Basenkreislauf entnommen werden.

Weiterhin ist in dem Fließschema in Fig. 1 zu entnehmen, dass die erfindungsgemäße Anlage in einer beispielhaften Ausführung auch einen Elektrodenkreislauf aufweist. Der Elektrodenkreislauf umfasst mindestens eine Elektrodenkammer (hier beide Elektrodenkammern) sowie einen Vorlagebehälter 60. In dem Elektrodenkreislauf zirkuliert Elektrolyt (z.B. Waschlösung) zirkulieren.

Zuletzt ist auch noch eine Ausgleichsleitung 6 zum Volumenausgleich zwischen dem Säurekreislauf und dem Basenkreislauf vorgesehen.

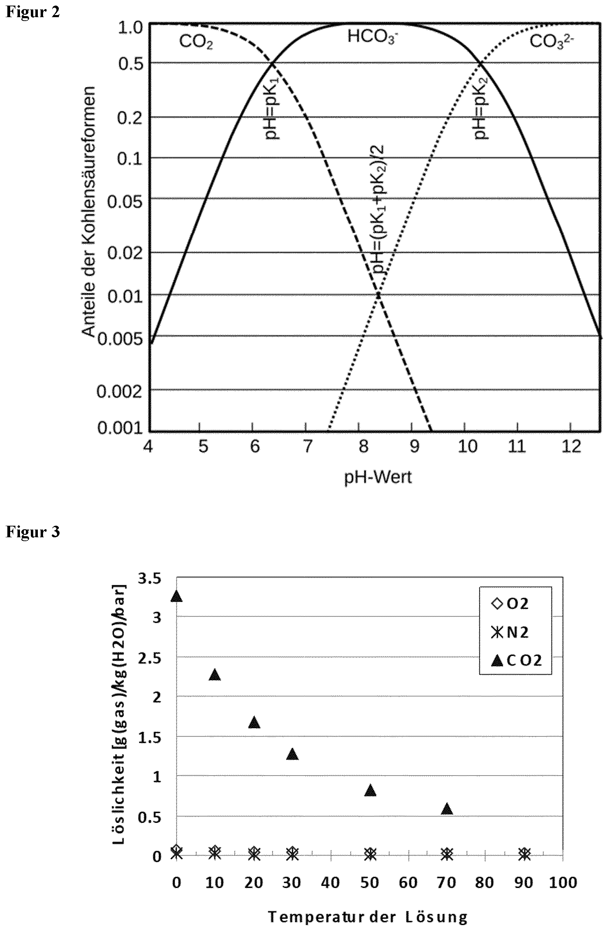

Aus dem Diagramm in **Fig. 2** kann abgelesen werden, welche Spezies (Carbonat, Hydrogencarbonat oder Kohlensäure) bei welchem pH-Wert überwiegend vorliegt. In anderen Worten ausgedrückt, verdeutlicht das Diagramm, welchen Einfluss der pH-Wert auf das Säure-Basen-Gleichgewicht der Kohlensäure hat. Kenntnisse hiervon sind wertvoll, um die "chemische" Löslichkeit von CO₂ zu kontrollieren und für die Zwecke der CO₂-Gewinnung zu nutzen. Insbesondere kann aus dem Diagramm geschlossen werden, welche pH-Werte jeweils für eine CO₂ Absorption im Gaswäscher und eine CO₂ Desorption eingestellt werden sollten.

**Fig. 3** zeigt ein Diagramm der "physikalischen" Löslichkeit verschiedener Gase in Abhängigkeit der Temperatur. Insbesondere ist die Löslichkeit von CO₂ gegen die Temperatur aufgetragen. Kenntnisse hiervon sind wertvoll, um die "physikalische" Löslichkeit von CO₂ zu kontrollieren und für die Zwecke der CO₂-Gewinnung zu nutzen. Insbesondere kann aus dem Diagramm geschlossen werden, welche Temperatur jeweils für eine CO₂ Absorption im Gaswäscher und eine CO₂ Desorption vorteilhaft ist. Dem Diagramm lässt sich entnehmen, dass die CO₂-Desorption bei erhöhten Temperaturen, z.B. oberhalb von Raumtemperatur, begünstigt ist. Gleichzeitig ist es vorteilhaft, die CO₂-Absorption bzw. CO₂-Wäsche bei niedrigeren bzw. moderaten Temperaturen durchzuführen.

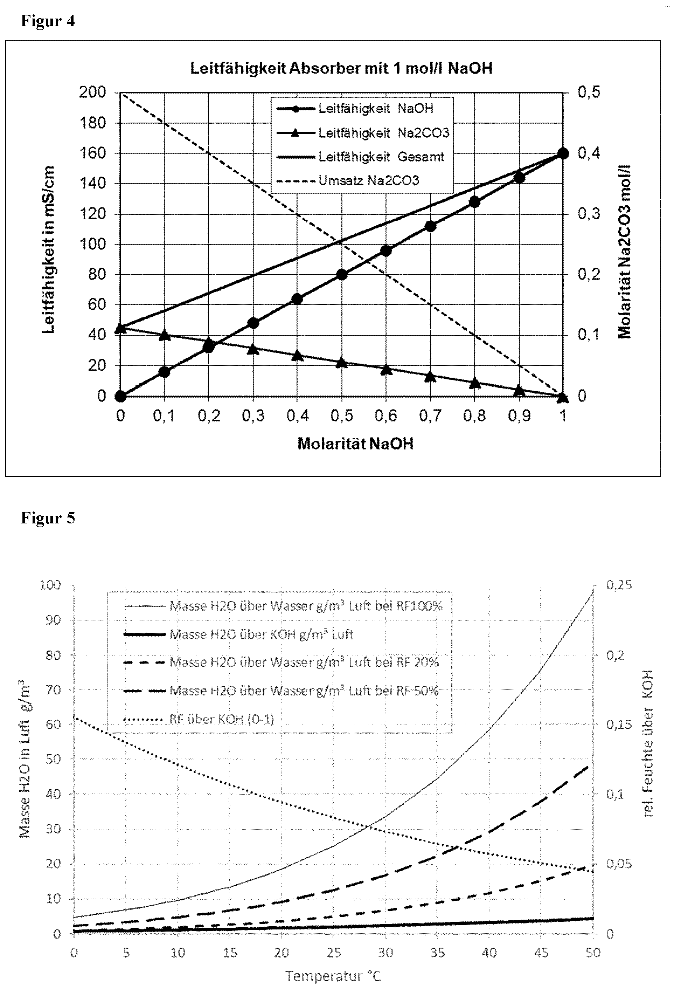

Das Diagramm in **Fig. 4** ist für die Steuerung des erfindungsgemäßen Verfahrens mit Hilfe von Leitfähigkeitssensoren wichtig. Hier ist der Zusammenhang zwischen elektrischer Leitfähigkeit und Beladungsgrad für verschiedene Waschlösungen gezeigt.

**Fig. 5** zeigt ein Diagramm, aus dem der Wassergehalt der Luft über reinem Wasser und gesättigter KOH bei verschiedenen Temperaturen abgelesen werden kann. Angenommen das CO₂-haltige Gasgemisch ist Luft mit einer Temperatur von 30 °C und einer rel. Feuchte von 50%, würde man bei einem Betrieb des Gaswäschers mit reinem Wasser (nicht erfindungsgemäß) ca. 15 g Wasser pro Kubikmeter Luft durch Verdunstung verlieren. Beim Betrieb des Gaswäschers mit gesättigter Kaliumhydroxidlösung (bei 20 °C ca. 50%-ige KOH-Lösung), gewinnt man durch die hygroskopische Eigenschaft von KOH ca. 10 g Wasser pro Kubikmeter Luft.

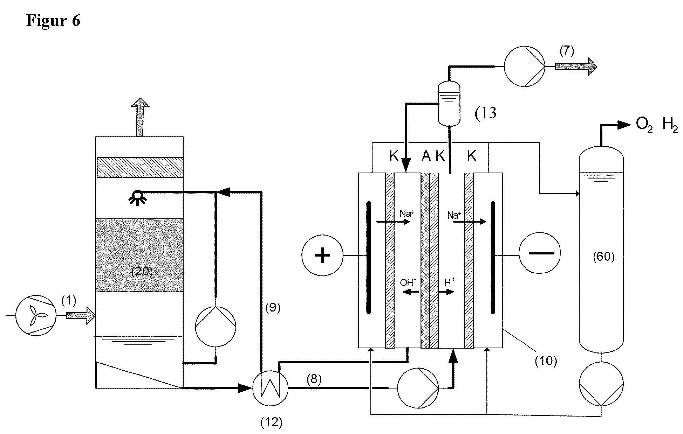

In **Fig. 6** wird über eine Zuleitung 1 ein CO₂-haltiges Gasgemisch in den Gaswäscher 20 geleitet. Hierbei kann ein Gebläse oder ein Kompressor zum Einsatz kommen. Die Gaszuleitung ist am Wäschersumpf oder seitlich am Gaswäscher 20 installiert. Zur Gewinnung von CO₂ aus dem Gasgemisch erfolgt eine Kontaktierung des Gasgemischs mit einer basischen Waschlösung. Die basische Waschlösung ist bevorzugt eine wässrige Lösung von Hydroxidionen und Kationen aus der 1. Hauptgruppe des Periodensystems. Bei der Beschreibung von Fig. 1 wird zur Vereinfachung auf Natronlauge (NaOH) als basische Waschlösung Bezug genommen. Die Waschlösung fließt, wie hier dargestellt ist, bevorzugt im Kreis und wird in einer Elektrodialyse immer wieder regeneriert. Das CO₂-haltige Gasgemisch kann der Waschlösung im Gaswäscher 20 entgegenströmen (Gegenstrom-Prinzip). Alternativ können auch Gaswäscher mit Kreuzstromführung eingesetzt werden. Nach Kontaktierung von CO₂-haltigem Gasgemisch und basischer Waschlösung verlässt das CO₂-arme bzw. abgereicherte Gasgemisch den Gaswäscher über Kopf, während die beladene Waschlösung am Wäschersumpf entnommen wird und mit Hilfe einer Pumpe in Richtung des Elektrodialyse-Separators 10 gefördert wird.

Dort wird die beladene Waschlösung in eine erste Kammer des Elektrodialyse-Separators 10 gespeist. Die erste Kammer befindet sich zwischen der kationenselektiven Seite K der bipolaren Membran AK und der Kationentauschermembran K. Durch das elektrolytische Behandeln in dieser Kammer sinkt der pH-Wert der beladenen Waschlösung. Durch Erniedrigung des pH-Werts bildet sich aus dem in der beladenen Waschlösung vorliegenden Carbonat und Hydrogencarbonat Kohlensäure, die je nach Druck und Temperaturbedingungen noch für kurze Zeit in physikalischer Lösung vorliegen kann. Nach Austritt der beladenen Waschlösung aus dem Elektrodialyse-Separator 10 und bei Eintritt in die Entgasungseinrichtung 13 kommt es zu einer Entspannung, so dass gasförmiges CO₂ freigesetzt wird.

Das CO₂ kann dann am Kopf der Entgasungseinrichtung 13 bei atmosphärischem Druck von 0-50 mbar abgezogen (Vergleich Stoffstrom 7) und zur Weiterverarbeitung z.B. komprimiert und in einem Zwischenbehälter gepuffert werden. Mittels geregelter Überströmventile kann eine Steuerung implementiert werden, die bei konstantem Behälterdruck gerade so viel CO₂ abzieht, wie freigesetzt wird. Zur Überwachung der CO₂-Qualität hinsichtlich des Sauerstoffgehalts kann in der Saugleitung des Kompressors eine Lambda-Sonde eingebaut werden.

Die desorbierte Waschlösung wird ausgehend von der Entgasungseinrichtung 13 in die zweite Kammer des Elektrodialyse-Separators 10 gefördert. Die zweite Kammer befindet sich zwischen der Anionentauscherseite A der bipolaren Membran AK und der Kationentauschermembran K. Durch elektrodialytisches Behandeln der desorbierten Waschlösung wird die basische Waschlösung bereitgestellt bzw. für den ersten Schritt des Verfahrens regeneriert und über die Leitung 9 dem Gaswäscher zugeführt.

Die Prozesse, die in dem Elektrodialyse-Separator ablaufen sind analog zu den Prozessen in der Verfahrensvariante gemäß dem ersten Aspekt der Erfindung (siehe Erläuterungen zu Fig. 1).

Des Weiteren umfasst auch die Anlage für das Verfahren gemäß dem zweiten Aspekt der Erfindung in einer beispielhaften Ausführung einen Elektrodenkreislauf aufweist. Der Elektrodenkreislauf umfasst mindestens eine Elektrodenkammer (hier beide Elektrodenkammern) sowie einen Vorlagebehälter 60. In dem Elektrodenkreislauf zirkuliert Elektrolyt (z.B. Waschlösung).

## Patentansprüche

1. Kontinuierliches Verfahren zur Gewinnung von gasförmigem CO₂ aus einem CO₂-haltigen Gasgemisch, umfassend:
(a) Kontaktieren eines CO₂-haltigen Gasgemischs mit einer basischen Waschlösung, wobei die basische Waschlösung zumindest einen Teil des CO₂ in dem CO₂-haltigen Gasgemisch absorbiert und eine beladene Waschlösung bildet,
(b) Mischen der beladenen Waschlösung mit einer Lösung enthaltend Kohlensäure,
(c) Abtrennen von gasförmigem CO₂ unter Erhalt einer desorbierten Waschlösung, und
(d) elektrodialytisches Bereitstellen der Lösung enthaltend Kohlensäure und der basischen Waschlösung unter Einsatz der desorbierten Waschlösung aus Schritt (c),
wobei die basische Waschlösung in Schritt (a) zumindest teilweise aus der in Schritt (d) bereitgestellten basischen Waschlösung stammt, und
wobei die in Schritt (d) bereitgestellte Lösung enthaltend Kohlensäure in Schritt (b) verwendet wird.

2. Kontinuierliches Verfahren zur Gewinnung von gasförmigem CO₂ aus einem CO₂-haltigen Gasgemisch, umfassend:
(a) Kontaktieren eines CO₂-haltigen Gasgemischs mit einer basischen Waschlösung, wobei die basische Waschlösung zumindest einen Teil des CO₂ in dem CO₂-haltigen Gasgemisch absorbiert und eine beladene Waschlösung bildet,
(b) elektrodialytisches Behandeln der beladenen Waschlösung,
(c) Abtrennen von gasförmigem CO₂ unter Erhalt einer desorbierten Waschlösung,
(d) elektrodialytisches Behandeln der desorbierten Waschlösung zum Bereitstellen der basischen Waschlösung,
wobei die basische Waschlösung in Schritt (a) zumindest teilweise aus der in Schritt (d) bereitgestellten basischen Waschlösung stammt, und
wobei das elektrodialytische Behandeln der beladenen Waschlösung in Schritt (b) und der desorbierten Waschlösung in Schritt (d) in benachbarten Kammern eines Elektrodialyse-Separators stattfindet.

3. Verfahren nach einem der Ansprüche 1 oder 2, wobei die basische Waschlösung ausgewählt ist aus der Gruppe bestehend aus einer wässrigen Lösung von Hydroxidionen und Kationen aus der 1. Hauptgruppe des Periodensystems, bevorzugt einer Natriumhydroxid- oder Kaliumhydroxidlösung; einer wässrigen Lösung hochmolekularer, verzweigter Amine, bevorzugt einer Polyethyleniminlösung; oder Mischungen hiervon.

4. Verfahren nach einem der vorhergehenden Ansprüche, wobei das CO₂-haltige Gasgemisch einen CO₂-Anteil von 0,03 bis 5 Vol.-%, bevorzugt 0,03 bis 0,5 Vol.-%, besonders bevorzugt 0,03 bis 0,05 Vol.-%, aufweist.

5. Verfahren nach Anspruch 1,
wobei die Waschlösung in den Schritten (b) und/oder (d) unter einem Druck von mindestens 0,9 bar, bevorzugt 1,0 bis 5,0 bar, insbesondere 1,0 bis 3,0 bar, steht und
wobei die Abtrennung von gasförmigem CO₂ in Schritt (c) durch Druckerniedrigung erfolgt, bevorzugt durch Druckerniedrigung um 0,5 bar oder mehr, insbesondere durch Druckerniedrigung um 0,8 bar bis 1,5 bar.

6. Verfahren nach einem der vorhergehenden Ansprüche, wobei die basische Waschlösung in Schritt (a) einen pH-Wert von mehr als 10, bevorzugt von mehr als 12, besonders bevorzugt von mehr als 13 hat.

7. Verfahren nach einem der vorhergehenden Ansprüche, wobei das Kontaktieren des CO₂-haltigen Gasgemischs mit der basischen Waschlösung in Schritt (a) im Gegenstrom oder Kreuzstrom erfolgt.

8. Verfahren nach einem der vorhergehenden Ansprüche, wobei während der Abtrennung von gasförmigem CO₂ auch Wasserdampf abgetrennt wird, wobei der Wasserdampf in einem weiteren Verfahrensschritt (e) bevorzugt auskondensiert wird, wobei die Kondensationswärme besonders bevorzugt rekuperiert wird.

9. Anlage zur kontinuierlichen Gewinnung von CO₂ aus einem CO₂-haltigen Gasgemisch, umfassend:
- einen Gaswäscher (20) zum Kontaktieren eines CO₂-haltigen Gasgemischs (1) mit einer basischen Waschlösung unter Erhalt einer beladenen Waschlösung,
- einen Elektrodialyse-Separator (10) zum Bereitstellen von Kohlensäure und basischer Waschlösung,
- eine erste Verbindung (8) zwischen dem Gaswäscher (20) und dem Elektrodialyse Separator (10) zum Zuführen der beladenen Waschlösung in einen Säurekreislauf, in dem eine Lösung enthaltend die von dem Elektrodialyse-Separator bereitgestellte Kohlensäure zirkuliert,
- eine im Säurekreislauf angeordnete Einheit (30) zum Abtrennen von CO₂ (7), und
- eine zweite Verbindung (9) zwischen dem Elektrodialyse-Separator (10) und dem Gaswäscher (20) zum Rückführen der basischen Waschlösung.

10. Anlage gemäß Anspruch 9, wobei der Elektrodialyse-Separator (10) eine Kathodenkammer umfassend eine Kathode und eine Anodenkammer umfassend eine Anode aufweist sowie mindestens zwei zwischen Kathodenkammer und Anodenkammer angeordnete Dialysekammern, wobei die Dialysekammern bevorzugt durch eine bipolare Membran (AK) voneinander getrennt sind.

11. Anlage gemäß einem der Ansprüche 9 oder 10, ferner umfassend einen Basenkreislauf, der einen Vorlagebehälter (40), eine zweite Dialysekammer des Elektrodialyse-Separators (10) und ein zweites Ventil (4) umfasst, und gegebenenfalls eine Ausgleichsleitung (6) zum Volumenausgleich zwischen dem Säurekreislauf und dem Basenkreislauf.

12. Anlage gemäß einem der Ansprüche 9 bis 11, wobei der Säurekreislauf die Einheit (30) zum Abtrennen von CO₂, eine erste Dialysekammer des Elektrodialyse-Separators (10) und ein erstes Ventil (5) umfasst.

13. Anlage gemäß einem der Ansprüche 9 bis 12, ferner umfassend mindestens einen Sensor zur Messung der Leitfähigkeit, des pH-Werts, des Drucks, des Durchflusses und/oder der Viskosität, wobei mindestens ein Sensor bevorzugt zwischen dem Elektrodialyse-Separator (10) und der Einheit (30) zum Abtrennen von CO₂ angeordnet ist.

14. Anlage gemäß Anspruch 13, ferner umfassend eine Steuereinheit, die eingerichtet ist, das erste Ventil (5) und/oder die an den Elektrodialyse-Separator (10) angelegte Spannung oder den Strom in Abhängigkeit der Messung durch den Sensor einzustellen.

15. Einheit zur Steuerung des Verfahrens gemäß einem der Ansprüche 1 und 2 bis 8 oder der Anlage gemäß einem der Ansprüche 9 bis 13, wobei die Einheit zur Steuerung eingerichtet ist,
- den Volumenstrom der basischen Waschlösung in Schritt (a) und/oder das Mischverhältnis in Schritt (b) und/oder die Bereitstellungsrate in Schritt (d), oder
- das erste Ventil (5) und/oder das zweite Ventil (4) und/oder die an den Elektrodialyse-Separator (10) angelegte Spannung oder den Strom,
in Abhängigkeit der vom Sensor gemessenen Leitfähigkeit, des pH-Werts, des Drucks, des Durchflusses und/oder der Viskosität zu kontrollieren,
wobei die Einheit zur Steuerung bevorzugt einen Algorithmus zum maschinellen Lernen aus bereits gesammelten Daten von dem Verfahren oder der Anlage verwendet.
